# EUROPEAN PATENT APPLICATION

(11) **EP 2 902 952 A1**
(43) Date of publication of application: **05.08.2015**
(21) Application number: 15152626.6
(22) Date of filing: 27.01.2015
(51) Int. Cl.: G06Q 10/10, G06Q 10/06

(54) **Data processing apparatus, data processing system, and data processing method**

(30) Priority: 31.01.2014 JP 2014016953
(71) Applicant: Ricoh Company, Ltd., Tokyo 143-8555 (JP)
(72) Inventor: Mihara, Ayumi, Tokyo, 143-8555 (JP)
(74) Representative: Schwabe - Sandmair - Marx

(57) **Abstract**

A data processing apparatus (10) includes a first storage unit (18) that stores information indicating an execution order of a plurality of process flows each starting by inputting data and ending by outputting data in a form usable by a user, a receiving unit (12) that receives input data for one of the process flows, an extracting unit (13) that extracts from the input data identification information of an execution unit for executing a combination of the process flows, and an executing unit (14) that executes one of the process flows with respect to the input data received by the receiving unit and stores information indicating the executed process flow in association with the identification information extracted by the extracting unit in a second storage unit (19). The executing unit (14) identifies the process flow to be executed with respect to the input data based on the first storage unit (18), the second storage unit (19), and the identification information extracted by the extracting unit.

## Description

### BACKGROUND OF THE INVENTION

### 1. Field of the Invention

The present invention relates to a data processing apparatus, a data processing system, and a data processing method.

### 2. Description of the Related Art

Systems are known that are capable of executing a pre-defined workflow with respect to image data of a document scanned by an image forming apparatus (see e.g. Japanese Laid-Open Patent Publication No. 2008-97586). In such systems, a workflow is defined such that data may flow in accordance with the business operation flow of a user.

Basically, one cycle of a workflow may be completed by inputting data, performing zero or more intermediate processes on the input data, and outputting the data generated by performing the above zero or more intermediate processes.

However, the business operation flow of a user may not be so simple as to be adequately supported by one workflow cycle. For example, a user may edit data output by a workflow and input the edited data to the same workflow or a different workflow. That is, when processing data such as document data, the handler of the document data may alternate between a system (virtual space) for executing a workflow and a user outside the system (real space), for example.

### SUMMARY OF THE INVENTION

In view of the above, an aspect of the present invention relates to improving work efficiency with respect to a document.

According to one embodiment of the present invention, a data processing apparatus is provided that includes a first storage unit configured to store information indicating an execution order of a plurality of process flows each starting by inputting data and ending by outputting data in a form usable by a user, a receiving unit configured to receive input data for a process flow of the plurality of process flows, an extracting unit configured to extract from the input data identification information of an execution unit for executing a combination of the plurality of process flows; and an executing unit configured to execute the process flow of the plurality of process flows with respect to the input data received by the receiving unit and store information indicating the executed process flow in association with the identification information extracted by the extracting unit in a second storage unit. The executing unit identifies the process flow to be executed with respect to the input data based on the first storage unit, the second storage unit, and the identification information extracted by the extracting unit.

### BRIEF DESCRIPTION OF THE DRAWINGS

FIG. 1 illustrates an exemplary configuration of a delivery management system according to an embodiment of the present invention;
FIG. 2 illustrates an exemplary hardware configuration of a delivery management server according to an embodiment of the present invention;
FIG. 3 illustrates an exemplary functional configuration of the delivery management server according to an embodiment of the present invention;
FIG. 4 illustrates an exemplary configuration of a job input unit;
FIG. 5 illustrates an exemplary business operation flow according to an embodiment of the present invention;
FIG. 6 illustrates an exemplary combination or set of workflows for implementing a business operation flow;
FIG. 7 is a flowchart illustrating exemplary process steps executed by the delivery management server;
FIG. 8 illustrates an exemplary configuration of a flow set definition storage unit;
FIG. 9 illustrates an exemplary configuration of a progress management table for a flow set job;
FIG. 10 illustrates an exemplary configuration of a flow table;
FIG. 11 illustrates an exemplary configuration of a plugin table; and
FIG. 12 illustrates an exemplary configuration of a device table.

### DESCRIPTION OF THE PREFERRED EMBODIMENTS

In the following, embodiments of the present invention are described with reference to the accompanying drawings.

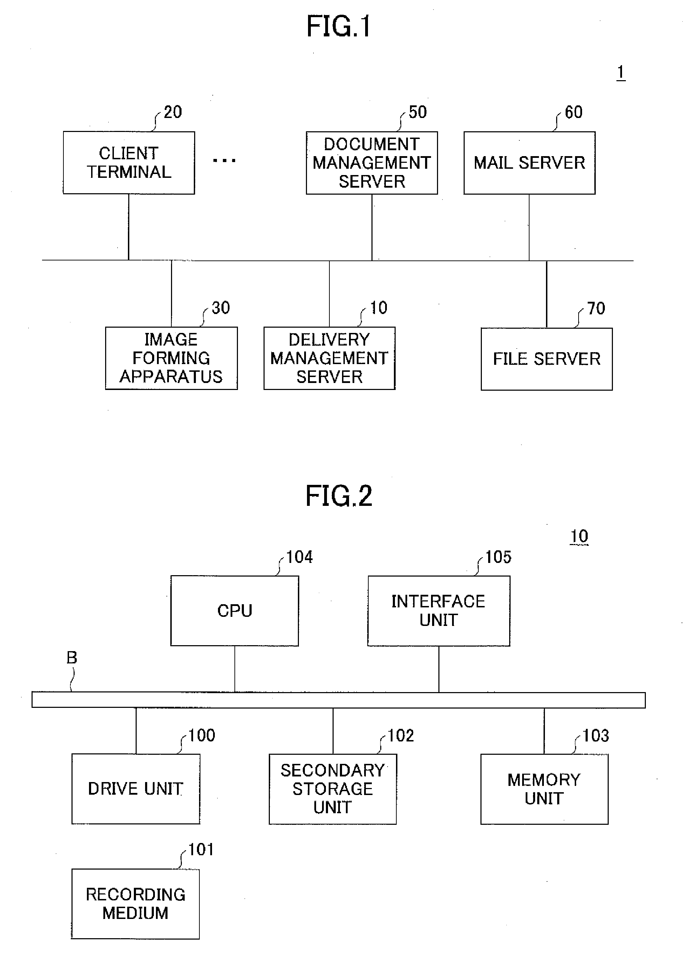

FIG. 1 illustrates an exemplary configuration of a delivery management system 1 according to an embodiment of the present invention. In FIG. 1, the delivery management system 1 includes a delivery management server 10, at least one client terminal 20, at least one image forming apparatus 30, a document management server 50, a mail server 60, and a file server 70 that are interconnected by a network (which may be wired or wireless) such as a LAN (Local Area Network) or the Internet.

The client terminal 20 is used for inputting (transmitting) data to the delivery server 10 and performing operations (e.g. referencing, editing) on data output (transmitted) thereto from the delivery management server 10. That is, in the present embodiment, the client terminal 20 may be an example of a data input source for the delivery management server 10 as well as an example of an output destination (delivery destination) for an execution result of a workflow executed by the delivery management server 10. Examples of the client terminal 20 include a mobile phone, a smartphone, a tablet terminal, and a PC (personal computer).

The image forming apparatus 30 scans a document to generate image data of the document and inputs (transmits) the scanned image data to the delivery management server 10. Also, the image forming apparatus 30 prints out data transmitted from the delivery management server 10. That is, in the present embodiment, the image forming apparatus 30 may be an example of a data input source for the delivery management server 10 as well as an example of an output destination (delivery destination) for an execution result of a workflow executed by the delivery management server 10.

The delivery management server 10 is a computer that executes a pre-defined workflow with respect to input data. Note that a workflow refers to a process flow implemented by an ordered set of one or more process units (tasks) each implementing a complete function independently or on their own. A workflow according to the present embodiment may start by inputting data and end by outputting data in a form usable by a user. Note that the process unit described above may correspond to a so-called "activity" in general workflow terminology.

The document management server 50 is a computer having a database for managing data in association with corresponding attribute information, for example. The document management server 50 is an example of a delivery destination for an execution result of a workflow executed by the delivery management server 10. In a case where the document management server 50 corresponds to the delivery destination, data delivered thereto may be stored in the database of the document management server 50, for example.

The mail server 60 has functions similar to those of a conventional mail server. In the present embodiment, the mail server 60 is configured to receive an email addressed to a predetermined email address (referred to as "flow address" hereinafter) that is transmitted from the client terminal 20 via a communication protocol such as SMTP (Simple Mail Transfer Protocol) and retain the received email. The mail server 60 is further configured to receive an acquisition request for an email addressed to the flow address from the delivery management server 10 and transmit (return) the retained email to the delivery management server 10 in response to the acquisition request. The delivery management server 10 may acquire the retained email from the mail server 60 using a communication protocol such as POP (Post Office Protocol) or IMPA (Internet Message Access Protocol), for example. Note that the mail server 60 may also be a delivery destination for an execution result of a workflow executed by the delivery management server 10. In a case where the mail server 60 corresponds to the delivery destination, data delivered thereto may be attached to an email to be forwarded to an email address designated in the workflow, for example.

The file server 70 is a computer that stores and manages a file to be shared on a network. In the present embodiment, the file server 70 is an example of a data input source for the delivery management server 10. For example, a file stored in a predetermined folder of the file server 70 may be transmitted to the delivery management server 10. Note that the file server 70 may also be a delivery destination for an execution result of a workflow executed by the delivery management server 10. In a case where the file server 70 corresponds to the delivery destination, data delivered thereto may be stored in a folder of the file server 70, for example.

FIG. 2 is a diagram illustrating an exemplary hardware configuration of the delivery management server 10 according to an embodiment of the present invention. In FIG. 2, the delivery management server 10 includes a drive unit 100, a secondary storage unit 102, a memory unit 103, a central processing unit (CPU) 104, and an interface unit 105 that are interconnected by a bus B.

A program for executing a process at the delivery management server 10 may be provided by a recording medium 101 such as a CD-ROM. When the recording medium 101 storing the program is loaded into the drive unit 100, the program may be installed in the secondary storage unit 102 from the recording medium 101 via the drive unit 100. The program, however, does not necessarily have to be installed from the recording medium 101, and may alternatively be downloaded from other computers via a network, for example. The secondary storage unit 102 stores files and data in addition to installed programs.

The memory unit 103 reads a program from the secondary storage unit 102 and stores the read program in response to an instruction to activate the program. The CPU 104 implements a function of the delivery management server 10 by executing a relevant program stored in the memory unit 103. The interface unit 105 is used as an interface for establishing connection with a network.

Note that in some embodiments, the delivery management server 10 may be configured by a computer system including a plurality of computers, for example.

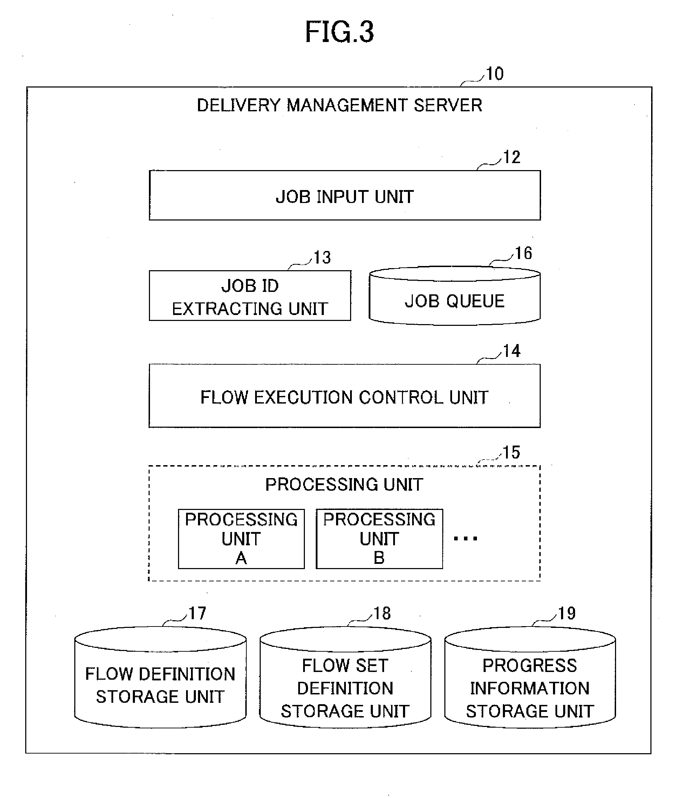

FIG. 3 illustrates an exemplary functional configuration of the delivery management server 10. In FIG. 3, the delivery management server 10 includes a job input unit 12, a job ID extracting unit 13, a flow execution control unit 14, and a processing unit 15. These functional units may be implemented by the CPU 104 executing a relevant program installed in the delivery management server 10, for example. The delivery management server 10 also implements storage units including a job queue 16, a flow definition storage unit 17, a flow set definition storage unit 18, and a progress information storage unit 19. These storage units may be implemented by the secondary storage unit 102 or a storage device connected to the delivery management server 10 via a network, for example. In some embodiments, the job queue 16 may be implemented by the memory unit 103.

The flow definition storage unit 17 stores flow definition data. Flow definition data refers to data including definition information relating to the process flow of a workflow. In the present embodiment, one set of flow definition data corresponds to one workflow. Accordingly, flow definition data is created for every workflow having a different process flow from another workflow.

The flow set definition storage unit 18 stores definition information of a workflow set. A workflow set refers to an ordered set of a plurality of workflows or a concept relating the ordered execution of a plurality of workflows. The definition information of a workflow set includes information indicating the execution order of the workflows included in the workflow set.

The progress information storage unit 19 stores progress information of each execution unit (job) for executing a workflow set (hereinafter referred to as "flow set job"). Specifically, the progress information storage unit 19 stores, for each flow set job, information indicating the workflow of the workflow set that has been executed.

The job input unit 12 receives a workflow execution request and input data for the workflow specified in the workflow execution request, and inputs job information relating to a job for executing the workflow to the job queue 16. In the present embodiment, a job for executing a workflow refers to an execution unit for executing the workflow. For example, in a case where the same workflow is executed multiple times, each execution of the workflow corresponds to a different job.

The job ID extracting unit 13 extracts a flow set job ID from the input data in response to a request from the job input unit 12. A flow set job ID refers to identification information for identifying each flow set job corresponding to an execution unit for executing a workflow set.

The job queue 16 stores job information input thereto. Job information may include identification information of a workflow or a workflow set to be executed and input data for the workflow or workflow set, for example. In a case where a flow set job ID is extracted by the job ID extracting unit 13, the extracted flow set job ID may also be included in the job information.

The flow execution control unit 14 acquires job information from the job queue 16 and controls execution of a workflow or a workflow set according to corresponding flow definition data of the workflow or corresponding definition information of the workflow set specified by the job information.

The processing unit 15 executes a process of a process unit (activity) constituting a workflow. In one example, one activity may be implemented by one process unit 15. In this case, a workflow may be implemented by a series of connected processes executed by one or more processing units 15 each configured to execute a different process, for example. In FIG. 3, a processing unit A and a processing unit B are illustrated as examples of the processing unit 15. Note that each processing unit 15 may be implemented by the CPU 104 executing an independent program module, for example. Note that in the following, a program module for enabling the delivery server 10 (CPU 104) to implement the function of the processing unit 15 is referred to as a "plugin".

In the present embodiment, one or more process units constituting a workflow to be executed by the delivery server 10 may be generally classified into an input process, an intermediate process, or an output process. An input process may include a process of inputting data to be processed by a workflow from an external device such as the image forming apparatus 30, the mail server 60, or the file server 70, for example.

An intermediate process may include processes such as processing or converting the data input by the input process or data generated by a preceding intermediate process, for example. Specific examples of an intermediate process include a noise removal process, an OCR (Optical Character Recognition) process, a translation process, and a data conversion process.

An output process may include processes for outputting the data input by the input process or data generated by an intermediate process in a form usable by a user. Examples of outputting data in a form usable by the user include not only printing data on paper, but also electronically storing data or outputting data in other ways to enable the user to access and use the data via an application program, for example. In one example, the output process may be a delivery process for delivering data to a folder of the document management server 50. In another example, the mail server 60 may be the delivery destination of the data. Also, the image forming apparatus 30 corresponding to the input source of the input data (e.g. image data) or another image forming apparatus 30 may be the delivery destination of the data. In this case, the image forming apparatus 30 corresponding to the delivery destination may print out the delivered data.

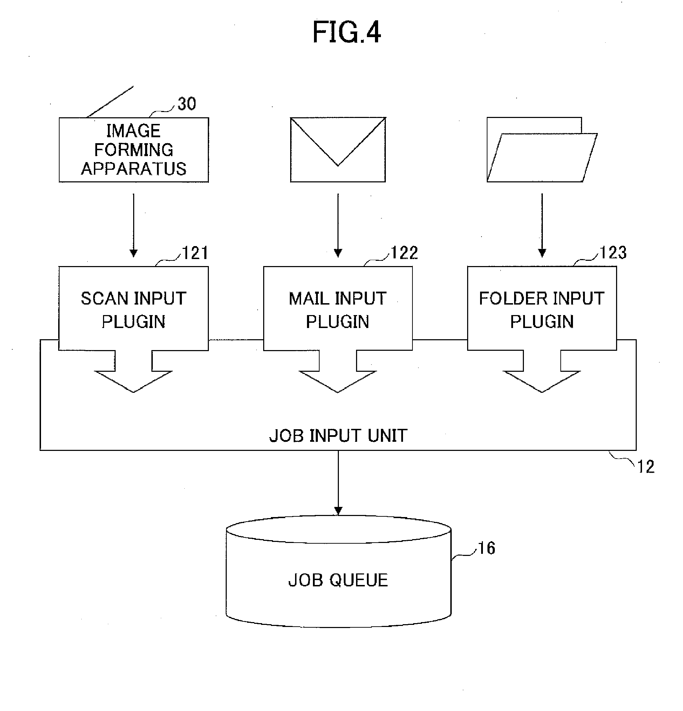

In FIG. 3, the processing unit 15 executes an intermediate process or an output process. On the other hand, the job input unit 12 executes an input process. In the input process, various types of external devices may be the input source of the data to be processed. Also, the input method for inputting the data (acquisition method or receiving method as viewed from the delivery management server 10) may vary depending on the type of the external device. In order to flexibly adapt to such circumstances, the job input unit 12 may have a configuration as illustrated in FIG. 4, for example.

FIG. 4 illustrates an exemplary configuration of the job input unit 12. As with the processing unit 15, data exchange between the job input unit 12 and an input source of data is implemented by a plugin corresponding to a program module that can be plugged into the job input unit 12. In FIG. 4, a scan input plugin 121, a mail input plugin 122, and a folder input plugin 123 are illustrated as examples of plugins installed in the job input unit 12.

The scan input plugin 121 is a plugin for receiving input data from the image forming apparatus 30. That is, the scan input plugin 121 is configured to receive image data scanned by the image forming apparatus 30 from the image forming apparatus 30 as input data. The scan input plugin 121 receives from the image forming apparatus 30 information such as a flow ID or a flow set ID along with the image data. The scan input plugin 121 configures the received flow ID or flow set ID and the image data into job information in a format prescribed by the flow execution control unit 14 and stores the job information in the job queue 16. Note that the flow ID is identification information for identifying each workflow definition (i.e. each flow definition data). The flow set ID is identification information for identifying each workflow set.

The mail input plugin 122 is a plugin for extracting input data to be processed by a workflow from an email addressed to a flow address. For example, the input data to be processed by the workflow may be data that is attached to the email. The input data may be image data or data in some other format. The mail input plugin 122 configures the data attached to the email and information described in the email into job information in a format prescribed by the flow execution control unit 14 and stores the job information in the job queue 16. The information described in the email may include a flow ID or a flow set ID, for example. Alternatively, a distinct flow address may be set up for each flow ID or flow set ID. In this case, the flow ID or flow set ID may be specified based on the flow address to which the email is addressed.

The folder input plugin 123 is a plugin for acquiring data (file) stored in a predetermined folder as input data of a workflow. For example, the folder input plugin 123 may poll a predetermined folder, and if data and a file including bibliographic information such as a flow ID or a flow set ID are stored in the folder, the folder input plugin 123 may acquire the data and the file. The folder input plugin 123 configures the acquired data and the information stored in the acquired file into job information in a format prescribed by the flow execution control unit 14 and stores the job information in the job queue 16. Note that a predetermined folder may be set up for each flow ID or flow set ID, for example. In this case, the flow ID or flow set ID may be specified based on the folder in which the data is stored. Also, the predetermined folder may be a folder created at the secondary storage unit 102 of the delivery management server 10, or a folder created at a storage unit that is connected to the delivery management server 10 via a network (e.g. storage unit of the client terminal 20 or the document management server 50).

Note that the job ID extracting unit 13 may also be implemented by one or more plugins. Such an arrangement may be convenient because the method of extracting a flow set job ID may vary depending on the format of the input data. For example, the job ID extracting unit 13 that is implemented by the scan input plugin 121 may be configured to extract a flow set job ID represented by a character string, a bar code, a 2D (two-dimensional) code, a woven pattern, or the like that is composited on image data. The job ID extracting unit 13 that is implemented by the mail input plugin 122 may be configured to extract a flow set job ID included in the title or body of an email addressed to a flow address, for example. Alternatively, the job ID extracting unit 13 that is implemented by the mail input plugin 122 may be configured to extract a flow set job ID represented by a character string, a bar code, a 2D code, a woven pattern, or the like that is composited on data attached to an email addressed to a flow address, for example. The job ID extracting unit 13 that is implemented by the folder input plugin 123 may be configured to extract a flow set job ID represented by a character string, a bar code, a 2D code, a woven pattern, or the like that is composited on data acquired from a folder, for example. Alternatively, the job ID extracting unit 13 that is implemented by the folder input plugin 123 may be configured to extract a flow set job ID from a file storing bibliographic information that is included in a folder along with data, for example.

Note that a plugin for inputting data by a method other than the input methods described above may be added. For example, a plugin for receiving input data via a web page may be added.

As described above, in the present embodiment, an input process, an intermediate process, and an output process are each implemented by one or more plugins. Accordingly, variations of definable workflows (workflow definitions) may be increased by creating a plugin for executing a desired process and adding the plugin.

In the following, a business operation flow contemplated in the present embodiment is described. In the present embodiment, a business operation flow may correspond to a flow of documents upon conducting business operations at an office, for example.

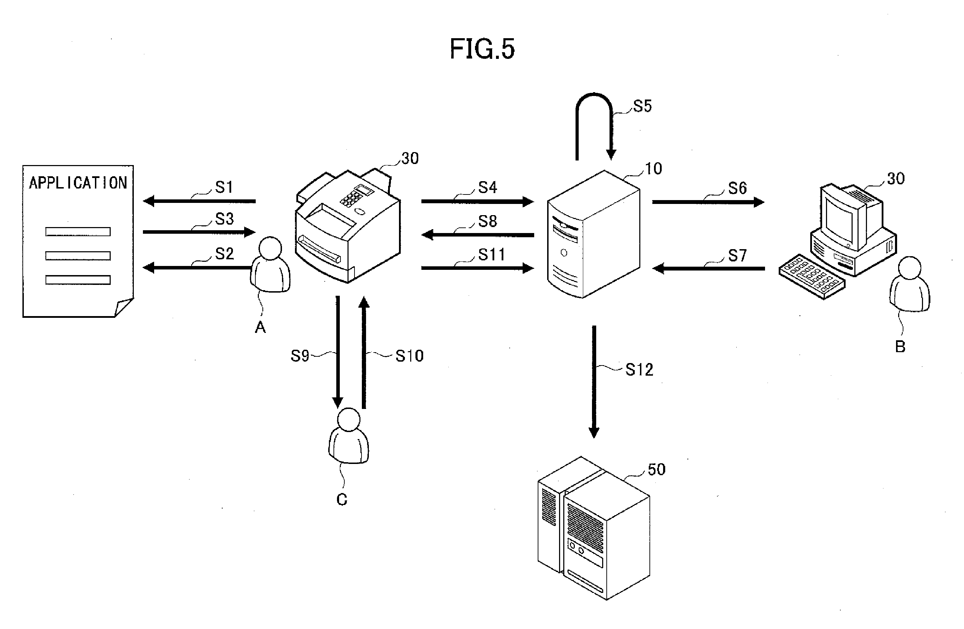

FIG. 5 illustrates an exemplary business operation flow. The business operation flow illustrated in FIG. 5 is related to some type of application form.

First, an applicant A saves document data of an application form (referred to as "application data" hereinafter) in a predetermined folder of the file server 70 and instructs the image forming apparatus 30 to print out the application data (step S1). In turn, the image forming apparatus 30 outputs (prints) the application form.

Then, the applicant A fills in necessary information in the application form that has been printed out (step S2) and prompts the image forming apparatus 30 to scan the completed application form (step S3). The image forming apparatus 30 transmits the scanned image data of the application form to the delivery management server 10 (step S4).

The delivery management server 10 executes an OCR process on the image data (step S5). As a result, information filled in the application form is output as text data. The delivery management server 10 transmits an email having the text data attached thereto to an email address of an inspector B (step S6). The inspector B views the email, checks whether there are any errors in the OCR result, and corrects any errors that are found in the text data. Upon completing the above procedures, the inspector B transmits an email with an attachment including the text data reflecting the corrections made (corrected text data) to a predetermined flow address (step S7).

The delivery management server 10 extracts the text data from the email and transmits the text data to the image forming apparatus 30 (step S8). The image forming apparatus 30 prints out the text data (step S9). An approver C views the printed application form, signs the application form if the application form is acceptable, and prompts the image forming apparatus 30 to scan the signed application form (step S10). In turn, the image forming apparatus 30 transmits the scanned image data of the signed application form to the delivery management server 10 (step S11). The delivery management server 10 delivers the scanned image data to the document management server 50. As a result, the scanned image data is registered in the document management server 50. Note that in some embodiments, before delivering the scanned image data, the delivery management server 10 may check the validity of the signature made by the approver C by performing a predetermined image process on the scanned image data, for example.

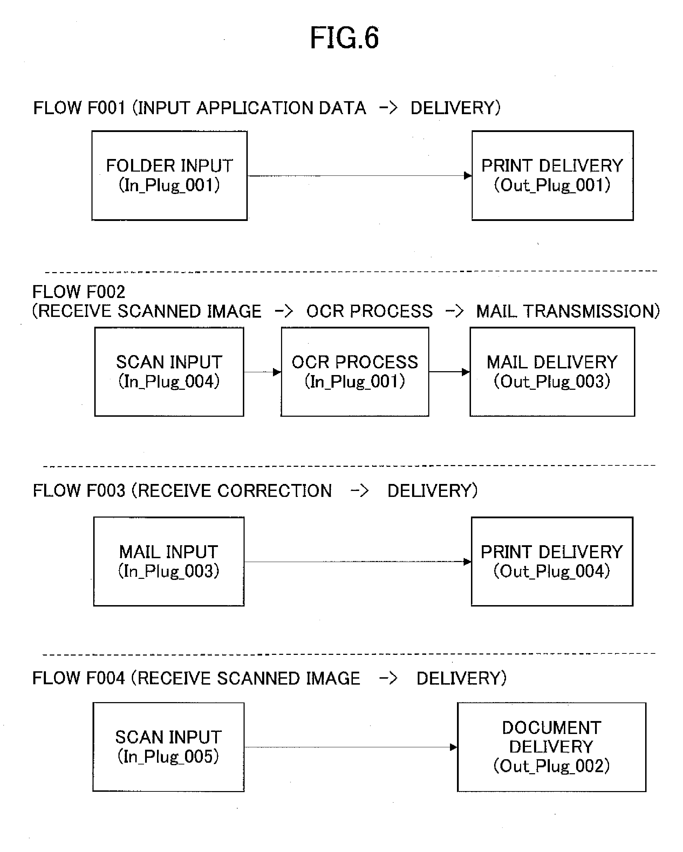

The business operation flow illustrated in FIG. 5 may be implemented by a combination or a set of a plurality of workflows as illustrated in FIG. 6, for example.

FIG. 6 illustrates an exemplary combination or set of workflows for implementing a business operation flow. In FIG. 6, four workflows F001-F004 are illustrated. Note that in each of the illustrated workflows F001-F004, the left side rectangle represents an input process and the right side rectangle represents an output process. Also, a rectangle positioned between the right side rectangle and the left side rectangle represents an intermediate process. Note that the identification information described in brackets within each rectangle is described in detail below.

The workflow F001 is a workflow made up of a process of the delivery management server 10 acquiring application data stored in a predetermined folder of the file server 70 as input data (folder input process) and a process of delivering the application data to the image forming apparatus 30 and prompting the image forming apparatus 30 to print out the application data (print delivery process).

The workflow F002 is a workflow made up of a process of the delivery management server 10 receiving from the image forming apparatus 30 scanned image data of the application form having necessary information filled therein (scan input process), a process of performing an OCR process on the image data, and a process of transmitting via email text data output as the OCR result to the email address of the inspector B (mail delivery process).

The workflow F003 is a workflow made up of a process of the delivery management server 10 receiving the text data corrected by the inspector B via email (email input process) and a process of delivering the text data to the image forming apparatus 30 and prompting the image forming apparatus 30 to print out the application data with the text data (print delivery process).

The workflow F004 is a workflow made up of a process of the delivery management server 10 receiving from the image forming apparatus 30 scanned image data of an application form that has been signed by the approver C (scan input process) and a process of delivering the scanned image data to the document management server 50 (document delivery process).

As described above, from the perspective of the user, the flow of one document (application form), is divided into four workflows. This is due to the intervention of work by the user in real space which makes it difficult to confine the processes relating to the flow of one single document as viewed from the user within a virtual space. That is, it is difficult to define the business operation flow illustrated in FIG. 5 as a single workflow.

Thus, the user has to acknowledge the presence of four workflows for processing one application form and be mindful of the workflow that has to be executed according to each task to be performed. In this respect, according to an aspect of the present embodiment, a workflow set may be defined in order to reduce the workload of the user under such circumstances. In the example of FIG. 6, one workflow set made up of the four workflows (workflows F110-F004) may be defined.

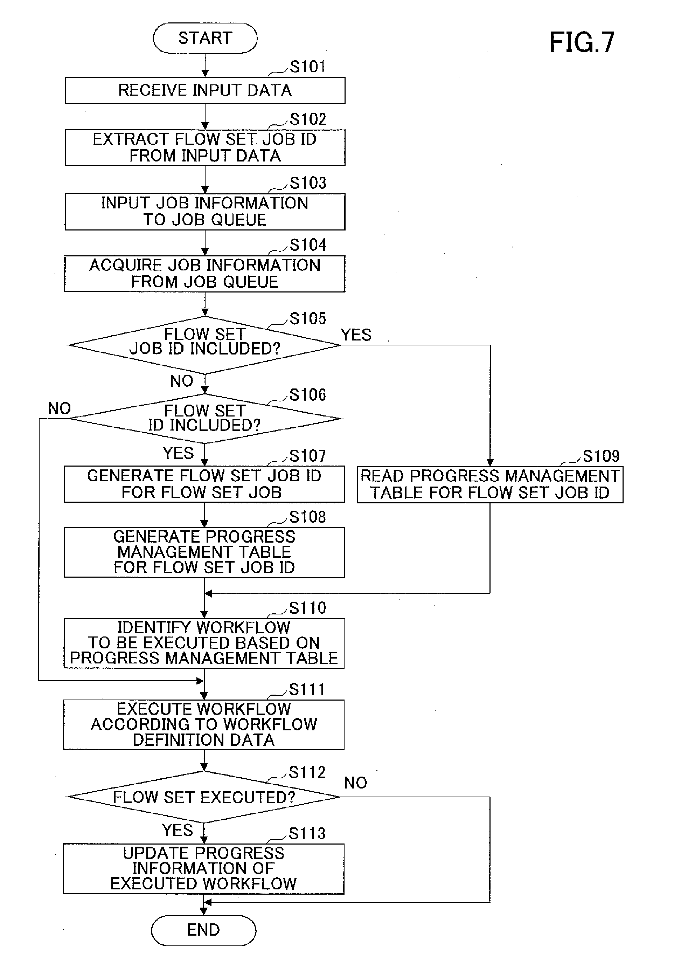

In the following, process steps executed by the delivery management server 10 are described. FIG. 7 is a flowchart illustrating exemplary process steps executed by the delivery management server 10.

In step S101, the job input unit 12 receives a workflow execution request including input data and the like. If the workflow specified by the workflow execution request is not part of a workflow set, the job input unit 12 receives the flow ID of the workflow (referred to as "independent workflow" hereinafter) along with the input data. If the workflow specified by the workflow execution request constitutes a part of a workflow set and the workflow is the first workflow to be executed within the workflow set, the job input unit 12 receives the flow ID of the workflow along with the input data. If the workflow specified by the workflow execution request constitutes a part of a workflow set and the workflow is to be executed second or later within the workflow set, the job input unit 12 does not have to receive the flow ID of the workflow.

For example, if step S101 is a scan input process, the user inputs the flow ID of the workflow to be executed or the flow set ID of the workflow set to be executed to the image forming apparatus 30 and prompts the image forming apparatus 30 to scan a document such as an application form. In turn, the image forming apparatus 30 transmits the flow ID or the flow set ID and the scanned image data of the document to the delivery management server 10. The flow ID or the flow set ID and the scanned image data are received by the scan input plugin 121.

Also, if step S101 is a folder input process, the user saves a file describing the flow ID of the workflow to be executed or the flow set ID of the workflow set to be executed along with input data in a predetermined folder. The folder input plugin 123 acquires the input data and the flow ID or flow set ID from the folder.

Also, if step S101 is a mail input process, the user transmits to a flow address an email having input data attached thereto and having a flow ID of a workflow to be executed or a flow set ID of a workflow set to be executed described in a predetermined format in the title or body of the email. The mail input plugin 122 inputs the input data and the flow ID or flow set ID by acquiring the email addressed to the flow address from the mail server 60 that retains the email.

However, as described above, if the workflow specified in the workflow execution request is part of a workflow set and is to be executed second or later within the workflow set, the job input unit 12 does not have to receive the flow set ID of the workflow set. In other words, the user does not need to specify the workflow set ID upon issuing a workflow execution request for the second and subsequent workflows. That is, the delivery server 10 may automatically identify the flow set ID for the second and subsequent workflows based on the flow set job ID extracted from the input data.

In response to receiving the workflow execution request, the job input unit 12 issues a request to the job ID extracting unit 13 to extract the flow set job ID from the input data. In turn, the job ID extracting unit 13 attempts to extract the flow set job ID according to the type of input data (step S102). Note that in a case where the workflow specified in the workflow execution request constitutes a part of a workflow set and is a workflow to be executed second or later within the workflow set, the flow set job ID is extracted. On the other hand, if the workflow specified by the workflow execution request is an independent workflow, or if the workflow specified by the workflow execution request constitutes a part of a workflow set and is to be executed first within the workflow set, the flow set job ID is not extracted.

Then, the job input unit 12 stores the input data and job information including the flow ID, the flow set ID, or the flow set job ID job in the job queue 16 (step S103). In other words, in the case where a flow ID or a flow set ID is received along with a workflow execution request, the job information includes the flow ID or the flow set ID. On the other hand, in the case where a flow set job ID is extracted by the job ID extracting unit 13, the job information includes the flow set job ID.

The flow execution control unit 14 may periodically reference the job queue 16, for example, and if job information is stored in the job queue 16, the flow execution control unit 14 may retrieve the job information from the job queue 16 (step S104). The job information retrieved by the flow execution control unit 14 is deleted from the job queue 16. Then, the flow execution control unit 14 determines whether a flow set job ID is included in the job information (step S105). If the job information does not include a flow set job ID (NO in step S105), the flow execution control unit 14 determines whether a flow set ID is included in the job information (step S106).

If a flow set ID is included in the job information (YES in step S106), the workflow specified in the workflow execution request is a workflow that constitutes a workflow set identified by the flow set ID (referred to as "target flow set" hereinafter). Also, the fact that the job information does not include a flow set job ID means that the workflow is a workflow to be executed first within the target flow set. Thus, the flow execution control unit 14 generates a flow set job ID identifying a flow set job for executing the target flow set (referred to as "target flow set job" hereinafter) (step S107).

Then, the flow execution control unit 14 references the flow set definition storage unit 18, generates a progress management table for the target flow set job, and stores the progress management table in the progress information storage unit 19 (step S108).

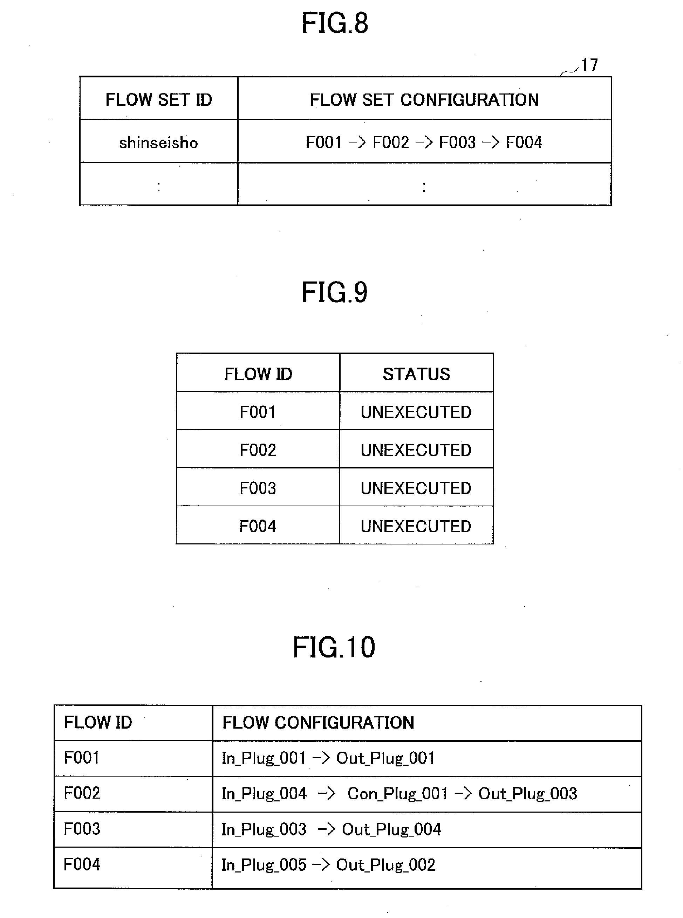

FIG. 8 illustrates an exemplary configuration of the flow set definition storage unit 18. As illustrated in FIG. 8, the flow set definition storage unit 18 stores a flow set configuration for each flow set ID. In the present example, a flow set configuration has the flow IDs of workflows that constitute a workflow set arranged according to their execution order. In FIG. 8, the workflow set with the flow set ID "shinseisho" is defined as a workflow set that executes the workflow F001, the workflow F002, the workflow F003, and the workflow F004 in this order.

FIG. 9 illustrates an exemplary configuration of a progress management table for one flow set job.

As illustrated in FIG. 9, the progress management table stores the flow ID and the status of each workflow constituting the target flow set job. The status is information indicating the execution status of a workflow identified by the flow ID. Exemplary values for the status may include "unexecuted", "executing", and "completed", for example. "Unexecuted" may indicate that the workflow has not yet been executed. "Executing" may indicate that the workflow is currently being executed. "Completed" may indicate that the execution of the workflow has been completed.

In step S108, a progress management table is generated that includes a record for storing the status for each flow ID that is stored in association with the flow set ID of the target flow set in the flow set definition storage unit 18. In the progress management table, the records are arranged according to the execution order of the workflows. Also, the value "unexecuted" may be stored as the initial value for the status. Note that the generated progress management table is stored in association with the flow set job ID of the target flow set job.

On the other hand, if the job information includes a flow set job ID (YES in step S105), the flow execution control unit 14 reads the progress management table that is associated with the flow set job ID from the progress information storage unit 19 (step S109). Note that in the case where the job information includes a flow set job ID, the job information relates to a workflow that is to be executed second or later within the target flow set.

Then, the flow execution control unit 14 identifies the workflow to be executed based on the progress management table that is generated in step S108 or read in step S109 (step S110). Specifically, the flow execution control unit 14 identifies the flow ID of the workflow that is foremost in execution order among the workflows having the status value "unexecuted" stored in the progress management table. Note that in the case where the job information does not include a flow set job ID (NO in step S105) and does not include a flow set ID (NO in step S106), the job information should include a flow ID of an independent workflow. In this case, this flow ID is identified as a flow ID of the workflow to be executed.

Then, the flow execution control unit 14 controls the execution of the identified workflow based on the flow definition data corresponding to the identified flow ID of the workflow (step S111). Note that upon starting the execution of the workflow, the flow execution control unit 14 updates the status value for the flow ID of the workflow that has been started to "executing" in the progress management table (FIG. 9) that is associated with the flow set job ID of the target flow set job.

In the present embodiment, the flow definition data includes a flow table, a plugin table, a device table, and the like.

FIG. 10 illustrates an exemplary configuration of a flow table. In FIG. 10, the flow table has a flow configuration stored in association with each flow ID. The flow configuration has identification information of plugins for executing process units of the workflow identified by the flow ID (hereinafter referred to as "plugin ID") arranged according to their execution order. In the present embodiment, for the sake of convenience, the plugin ID of a plugin for executing an input process starts with "In". The plugin ID of a plugin for executing an intermediate process starts with "Con". The plugin ID of a plugin for executing an output process starts with "Out". In the following descriptions, specific plugins are referred to by their plugin IDs.

Note that the flow IDs in FIG. 10 correspond to the identification numbers of the workflows illustrated in FIG. 6. Also, the plugin IDs of the plugins included in the flow configurations of FIG. 10 are indicated within corresponding rectangles of FIG. 6.

The flow execution control unit 14 inputs process execution requests to the processing units 15 corresponding to the plugins to be executed according to the execution order indicated by the flow configuration associated with a specified flow ID and prompts the processing units 15 to execute processes in the execution order indicated by the flow configuration. The process execution request includes data to be processed. Data to be processed may be data that is output as a processing result by the processing unit 15 that executes a preceding process. Alternatively, information may be set up for each plugin in the flow table (FIG. 10) beforehand indicating the plugin that is to output the data to be processed by each plugin, for example. Also, if the flow set job ID is generated in step S108, or if the job information includes a flow set job ID, the flow execution control unit 14 may also input the flow set job ID to each of the processing units 15. However, in some embodiments, the flow set job ID may only be input to the processing unit 15 that executes an output process, for example. The processing unit 15 that executes an output process includes the flow set job ID in the data to be output. For example, if the processing unit 15 is configured to execute a print delivery process, the processing unit 15 may composite a character string, a bar code, a 2D code, a woven pattern, or the like representing the flow set job ID on electronic data to be delivered to and printed by the image forming apparatus 30. If the processing unit 15 is configured to execute a mail delivery process, the processing unit 15 may describe the flow set job ID in a predetermined format in the title or the body of the email to be delivered.

Note that each plugin implementing each processing unit 15 references a plugin table and a device table upon executing a corresponding process associated with the plugin.

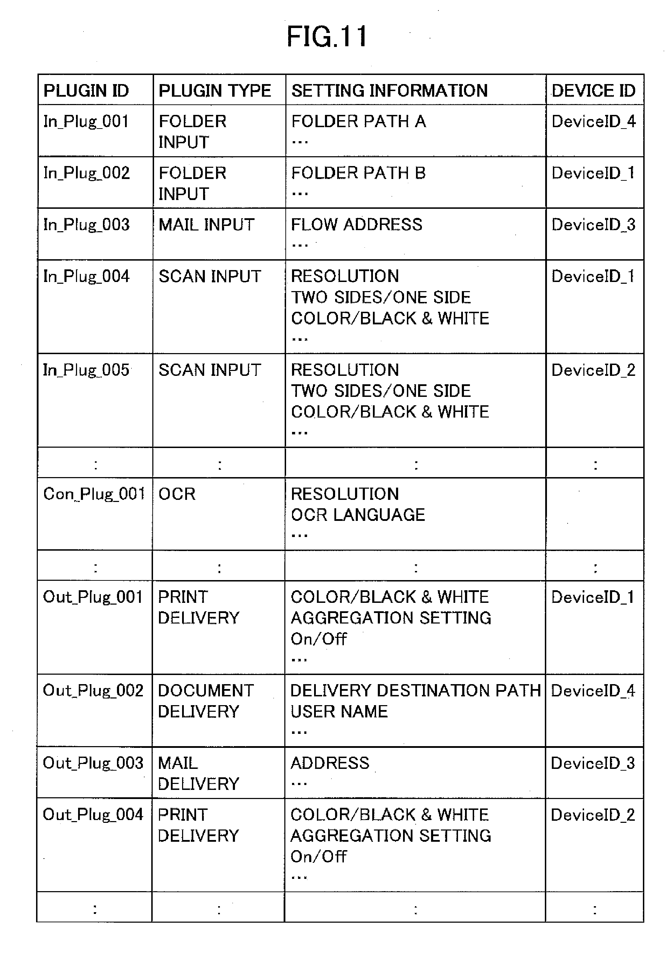

FIG. 11 illustrates an exemplary configuration of the plugin table. In FIG. 11, the plugin table has a plugin ID, a plugin type, setting information, and a device ID stored in association with each plugin.

The plugin type is the type of process that is to be executed by the plugin. The setting information includes settings for the plugin. The device ID is a valid information item for a plugin that needs to communicate with an external device and represents identification information of such external device. Detailed information of each external device is stored in the device table.

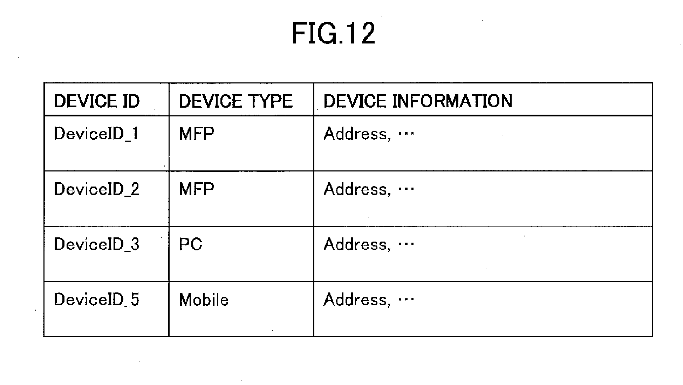

FIG. 12 illustrates an exemplary configuration of the device table. In FIG. 12, the device table has the device type and device information stored in association with each device ID. The device type is information indicating the type of the external device. The device information mainly includes information required for enabling the plugin to establish communication with the external device.

Each plugin that is instructed to execute a process by the flow execution control unit 14 executes the corresponding process based on the setting information stored in the plugin table in association with the plugin ID of the plugin.

Note that the setting information of a plugin of the plugin type "scan input" (also referred to as "scan input plugin" hereinafter) is forwarded to the image forming apparatus 30 that inputs scanned image data to be processed by the workflow including this plugin and is used by the image forming apparatus 30. Specifically, the image forming apparatus 30 scans an image based on the scan settings included in the setting information of the plugin. Note that the setting information of the plugin may be forwarded to the image forming apparatus 30, for example, when a flow ID of a workflow or a flow set ID of a workflow set to be executed is input via an operation panel of the image forming apparatus 30. In other words, when a flow ID or a flow set ID is input, the image forming apparatus 30 issues an acquisition request to the delivery management server 10 to acquire the setting information of the scan input plugin of the workflow identified by the input flow ID or the workflow to be executed within the workflow set identified by the input flow set ID. In response to such an acquisition request, the delivery management server 10 returns the setting information of the scan input plugin to the image forming apparatus 30.

When the execution of one workflow is completed, the flow execution control unit 14 determines whether the executed workflow is a workflow that constitutes a part of a workflow set (step S112). If the job information includes a flow set job ID or if a flow set job ID is generated in step S107, the flow execution control unit 14 determines that the workflow constitutes a part of a workflow set.

If the executed workflow constitutes a part of a workflow set (YES in step S112), the flow execution control unit 14 updates the corresponding status value for the flow ID of the executed workflow to "completed" in the progress management table (FIG. 9) that is associated with the flow set job ID of the target flow set job (step S113).

In the following, an exemplary case in which the target flow set corresponds to the workflow set as illustrated in FIGS. 6 and 8 ("shinseisho") is described. First, the applicant A saves a file including a description of the flow set ID "shinseisho" in a predetermined folder along with input data. As a result, the process as illustrated in FIG. 7 is performed with respect to the workflow F001. At this point, a progress management table for a flow set job for executing the workflow set is generated, and the status of the workflow F001 is updated to "completed". Also, an application form having the flow set job ID of the flow set job represented by a character string, a bar code, a 2D code, a woven pattern, or the like composited on the application data is printed by the image forming apparatus 30.

Then, the applicant A fills in the necessary information in the printed application form and prompts the image forming apparatus 30 to scan the application form. In turn, the image forming apparatus 30 transmits the scanned image data of the application form to the delivery management server 10. The flow execution control unit 14 of the delivery management server 10 determines that the workflow F002 is to be executed based on the progress management table that is associated with the flow set job ID extracted from the scanned image data. Accordingly, step S111 and subsequent steps illustrated in FIG. 7 are executed with respect to the workflow F002. As a result, the status of the workflow F002 is updated to "completed" in the progress management table. Also, an email with an attachment including text data obtained by performing an OCR process on the image data is transmitted to the email address of the inspector B. The flow set job ID extracted from the image data may be described in the title or body of the email. The sender address of the email may be a flow address.

Then, the inspector B that receives the email may correct the text data that is attached to the email. Then the inspector B attaches the corrected text data to a reply email to be sent in response to the received email and transmits the reply mail. If the sender address of the received email corresponds to a flow address, the reply email is automatically transmitted to the flow address as the destination address. Therefore, the inspector B does not have to change the destination address of the reply email. Also, the flow set job ID included in the received email is carried onto the reply email.

The reply email is received by the delivery management server 10. The flow execution control unit 14 of the delivery management server 10 determines that the workflow F003 is to be executed based on the progress management table that is associated with the flow set job ID extracted from the email. Accordingly, step S111 and subsequent steps illustrated in FIG. 7 are executed with respect to the workflow F003. As a result, the status of the workflow F003 is updated to "completed" in the progress management table. Also, an application form having the flow set job ID composited thereon is printed by the image forming apparatus 30. For example, a character string, a bar code, a 2D code, a woven pattern, or the like that represents the flow set job ID may be composited on the application form (application data).

Then, the approver C views the printed application form and signs the application form if it is acceptable. Then, the approver C prompts the image forming apparatus 30 to scan the signed application form. The image forming apparatus 30 transmits the scanned image data of the signed application form to the delivery management server 10. The flow execution control unit 14 of the delivery management server 10 determines that the workflow F004 is to be executed based on the progress management table that is associated with the flow set job ID extracted from the scanned image data. Accordingly, step S111 and subsequent steps are executed with respect to the workflow F004. As a result, the status of the workflow F004 is updated to "completed" in the progress management table. The image data of the application form is registered in the document management server 50.

As described above, according to an aspect of the present embodiment, a business operation flow that is divided into a plurality of workflows due to the intervention of work in real space may be defined as one workflow set. Also, according to an aspect of the present embodiment, a flow job ID corresponding to identification information for identifying each execution unit of a workflow set is included in output data output by an output process executed by a preceding workflow, and the flow job ID is extracted from the output data in an input process of a subsequent workflow. In this way, the user may be relieved of the need to always be mindful of the flow set job ID and the workload of the user may be reduced.

Also, according to an aspect of the present embodiment, the workflow progress of the workflows constituting a workflow set is managed in a progress management table and a next workflow to be executed may be automatically determined based on the progress management table. Such an arrangement may allow the user to be less mindful of the next workflow to be executed. As a result, work efficiency with respect to a document may be improved.

Also, because the progress management table is generated for each flow set job, even if two or more flow set jobs relating to the same flow set ID are executed in parallel, the delivery management server 10 may be able to identify the next workflow to be executed for each flow set job.

Note that the delivery management server 10 of the present embodiment is an example of a data processing apparatus and data processing system. The job input unit 12 is an example of a receiving unit. The job ID extracting unit 13 is an example of an extracting unit. The flow execution control unit 14 is an example of an executing unit. The flow set definition storage unit 18 is an example of a first storage unit. The progress information storage unit 19 is an example of a second storage unit. A workflow is an example of a process flow.

Although the present invention has been described above with reference to certain illustrative embodiments, the present invention is not limited to these embodiments, and numerous variations and modifications may be made without departing from the scope of the present invention.

The present invention can be implemented in any convenient form, for example, using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can comprise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium. The carrier medium can comprise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, a hard disk, a CD ROM, a magnetic tape device or a solid state memory device.

The hardware platform includes any desired hardware resources including, for example, a central processing unit (CPU), a random access memory (RAM), and a hard disk drive (HDD). The CPU may include processors of any desired type and number. The RAM may include any desired volatile or nonvolatile memory. The HDD may include any desired nonvolatile memory capable of recording a large amount of data. The hardware resources may further include an input device, an output device, and a network device in accordance with the type of the apparatus. The HDD may be provided external to the apparatus as long as the HDD is accessible from the apparatus. In this case, the CPU, for example, the cache memory of the CPU, and the RAM may operate as a physical memory or a primary memory of the apparatus, while the HDD may operate as a secondary memory of the apparatus.

The present application is based on and claims the benefit of priority of Japanese Patent Application No. 2014-016953 filed on January 31, 2014, the entire contents of which are hereby incorporated by reference.

## Claims

1. A data processing apparatus (10) comprising:
a first storage unit (18) configured to store information indicating an execution order of a plurality of process flows, the process flows each starting by inputting data and ending by outputting data in a form usable by a user;
a receiving unit (12) configured to receive input data for a process flow of the plurality of process flows;
an extracting unit (13) configured to extract from the input data identification information of an execution unit for executing a combination of the plurality of process flows; and
an executing unit (14) configured to execute the process flow of the plurality of process flows with respect to the input data received by the receiving unit and store information indicating the executed process flow in association with the identification information extracted by the extracting unit in a second storage unit (19);
wherein the executing unit (14) identifies the process flow to be executed with respect to the input data based on the first storage unit (18), the second storage unit (19), and the identification information extracted by the extracting unit.

2. The data processing apparatus as claimed in claim 1, wherein, with respect to the identification information extracted by the extracting unit, the executing unit identifies a process flow that is foremost in execution order among the process flows that have not yet been executed as the process flow to be executed with respect to the input data.

3. The data processing apparatus as claimed in claim 2, wherein the identification information of the execution unit for executing the combination of the plurality of process flows is included in output data of each of the plurality of process flows.

4. The data processing apparatus as claimed in any one of claims 1-3, wherein the extracting unit extracts the identification information of the execution unit for executing the combination of the plurality of process flows using a different method depending on a format of the input data.

5. A data processing system (10) including at least one computer, the data processing system comprising:
a first storage unit (18) configured to store information indicating an execution order of a plurality of process flows, the process flows each starting by inputting data and ending by outputting data in a form usable by a user;
a receiving unit (12) configured to receive input data for a process flow of the plurality of process flows;
an extracting unit (13) configured to extract from the input data identification information of an execution unit for executing a combination of the plurality of process flows; and
an executing unit (14) configured to execute the process flow of the plurality of process flows with respect to the input data received by the receiving unit and store information indicating the executed process flow in association with the identification information extracted by the extracting unit in a second storage unit (19);
wherein the executing unit (14) identifies the process flow to be executed with respect to the input data based on the first storage unit (18), the second storage unit (19), and the identification information extracted by the extracting unit.

6. The data processing system as claimed in claim 5, wherein, with respect to the identification information extracted by the extracting unit, the executing unit identifies a process flow that is foremost in execution order among the process flows that have not yet been executed as the process flow to be executed with respect to the input data.

7. The data processing system as claimed in claim 6, wherein the identification information of the execution unit for executing the combination of the plurality of process flows is included in output data of each of the plurality of process flows.

8. The data processing system as claimed in any one of claims 5-7, wherein the extracting unit extracts the identification information of the execution unit for executing the combination of the plurality of process flows using a different method depending on a format of the input data.

9. A data processing method comprising:
a receiving step (S101) of receiving input data for a process flow of a plurality of process flows each starting by inputting data and ending by outputting data in a form usable by a user;
an extracting step (S102) of extracting from the input data identification information of an execution unit for executing a combination of the plurality of process flows; and
an executing step (S111) of executing the process flow of the plurality of process flows with respect to the input data received in the receiving step and storing in a second storage unit (19) information indicating the executed process flow in association with the identification information extracted in the extracting step;
wherein the receiving step, the extracting step, and the executing step are executed by a computer; and
wherein the executing step (S111) includes identifying the process flow to be executed with respect to the input data based on a first storage unit (18) that stores information indicating an execution order of the plurality of process flows, the second storage unit (19), and the identification information extracted in the extracting step.

10. The data processing method as claimed in claim 9, wherein, with respect to the identification information extracted in the extracting step, the executing step identifies a process flow that is foremost in execution order among the process flows that have not yet been executed as the process flow to be executed with respect to the input data.

11. The data processing method as claimed in claim 10, wherein the identification information of the execution unit for executing the combination of the plurality of process flows is included in output data of each of the plurality of process flows.

12. The data processing method as claimed in any one of claims 9-11, wherein the extracting step extracts the identification information of the execution unit for executing the combination of the plurality of process flows using a different method depending on a format of the input data.
